# EUROPEAN PATENT APPLICATION

(11) **EP 4 748 475 A1**
(43) Date of publication of application: **27.05.2026**
(21) Application number: 25215395.2
(22) Date of filing: 12.11.2025
(51) Int. Cl.: B01D 53/04, F25J 3/04, B01D 53/26

(54) **APPARATUS AND PROCESS FOR LOW TEMPERATURE REGENERATION OF ADSORBENT MATERIAL**

(30) Priority: 12.11.2024 US 202418944730
(71) Applicant: Air Products and Chemicals, Inc., Allentown, PA 18106 (US)
(72) Inventor: Gibson, Simon, West Molesey, KT8 1QD (GB); Bongo, Christopher Robert, Allentown, 18106 (US); Wu, Dingjun, Macungie, 18062 (US); Morales, Jhoan Esteban Useche, Emmaus, 18049 (US)
(74) Representative: Beck Greener LLP

(57) **Abstract**

An apparatus and process for low temperature regeneration that can be utilized in adsorption systems can include feeding low temperature regeneration gas to at least one off-line adsorber for regeneration of the adsorbent material within the vessel of the off-line adsorber(s). The regeneration time period can be set to facilitate regeneration of the adsorbent material without a need for a high temperature regeneration to occur. Some embodiments can be configured so a post-cooling operation while the regeneration gas is fed to the adsorber(s) can be avoided to permit embodiments to more effectively utilize heating time.

## Description

### FIELD OF THE INVENTION

The present innovation relates to adsorbers, adsorption systems, processes for operation of adsorption systems and processes for regeneration of adsorbent material.

### BACKGROUND OF THE INVENTION

Purification units often utilize adsorbers, which typically come in four different common configurations: vertical, vertical cross flow, horizontal and radial. Purification units can be configured for Thermal Swing Adsorption (TSA). TSA's systems can be designed to remove components with high freezing points such as ambient moisture (e.g. water vapor) and carbon dioxide (CO2) which would otherwise freeze out in downstream processing, causing operability issue like blockage. Nitrous oxide (N2O), hydrocarbons and other impurities can also be removed via front-end purification to avoid these impurities from accumulating in downstream processes.

Purification units can alternatively be configured for Pressure Swing Adsorption (PSA). Such systems can utilize the cycling of pressure between low and high pressures to facilitate removal of impurities from a fluid and a subsequent regeneration of the adsorbent material via a release of the adsorbed impurities from the adsorbent material.

Examples of adsorbers, adsorption systems, TSA systems, and PSA systems can be appreciated from U.S. Patent Nos. 3,531,916, 4,472,178, 4,541,851, 4,784,672, 5,137,548, 5,232,474, 5,425,240, 5,614,000, 5,759,242, 5,846,295, 5,855,650, 5,914,455, 5,917,136, 6,086,659, 6,106,593, 6,152,991, 6,471,749, 6,506,236, 6,599,347, 6,866,075, 6,984,258, 7,022,159, 7,225,637, 7,264,651, 7,285,154, 7,413,595, 8,206,669, 8,262,783, 8,268,044, 8,404,024, 8,518,356, 8,734,571, 8,814,985, 9,108,145, 9,199,190, 9,463,434, 9,631,864, 9,731,241, and 11,137,205, U.S. Pat. App. Pub. Nos. 2011/0206581, 2011/0219950, 2019/0291078, and 2022/0001328 and Canadian Patent Publication No. 2,357,276 A.

### SUMMARY OF THE INVENTION

Conventional PSA systems often require a large quantity of adsorbent material and/or a short onstream time because the adsorbent material may not be fully regenerated by the cyclical pressure swing utilized in such systems. In contrast, a TSA system often can help minimize the size of the adsorber or adsorbent material bed needed and can also provide longer onstream times. But, TSA systems also typically have a significant added cost in terms of the energy that can be needed to heat the adsorbent material for regeneration of the material. Conventionally, relatively high temperature heating is utilized to sufficiently heat the offline adsorbent material for regeneration of the material in a TSA system. This heat can typically be applied for only an early portion of the regeneration process. This initial heating is subsequently followed by a cooling step where the initially fed heat is pushed through the bed of adsorbent material to desorb the impurities from the bed of material to regenerate the material. In conventional TSA systems, the offline bed of adsorbent material typically undergoes cooling to return the bed to its operating feed temperature or near its operating feed temperature before the adsorber is brought back to an online state for purification to adsorb impurities to minimize the chance that the heat from the regeneration process could be passed downstream of the adsorber when it is brought back online. It is conventionally desired to avoid such heat that is applied during the regeneration cycle being passed downstream into other processing equipment (e.g. heat exchanger, columns, etc.) because the heat can cause instability in downstream processing that can result in decreased yield or distillation performance for some applications (e.g. pre-purification for air separation systems, etc.). It is also conventionally desired to avoid such heat that is applied during the regeneration cycle being passed downstream because that heat may result in the temperature of downstream equipment exceeding the equipment's maximum design temperature.

We have also found that the cycling of heat from the colder on-line temperature state to the higher regeneration temperature state that can be applicable in regeneration of TSA systems can incur a significant thermal stress on the adsorbent material and the adsorber vessel. This can be of particular concern for radial adsorbers because their thermal expansion of internal elements (e.g. internal screens for retention of the adsorbent materials, etc.) can be more difficult to manage (e.g. can be harder to access and harder to replace due to the internal configuration of such adsorbers). The thermal cycling of the adsorbent material and the vessel can result in a reduced life for the material as well as the body of the vessel due to the thermal stress experienced from the thermal expansion and contraction that occurs when the temperature significantly changes from a cooler online temperature to the significantly hotter regeneration temperature.

Instead of utilization of a high temperature regeneration scheme for adsorbent material, embodiments of an apparatus and process can be provided to facilitate use of a low temperature regeneration scheme. Embodiments can be configured so adsorbers undergoing regeneration do not need to be cooled to their operational temperature prior to being brought back online for purification processing. Also, embodiments can be configured so that the duty of heating is sufficiently low so that no supplemental heating type device may be needed for providing regeneration and/or so that a smaller sized heating device may be utilized for the heating (e.g. a smaller electric heater, a smaller heat exchanger, etc.). In some embodiments, this type of approach can permit regeneration to occur by utilization of heat from one or more waste flows or via a feed aftercooler that can be positioned between the adsorption system and a compression system that can compress a feed of fluid for feeding to the adsorption system for purification.

Embodiments that may utilize a lower temperature scheme for regeneration can be adapted so that the adsorbent material undergoes regeneration for a longer period of time than is conventional. This longer regeneration time period that may be used with a lower temperature regeneration cycle of operation can have surprising benefits. For example, we found that utilization of a lower temperature regeneration temperature for a longer time period can avoid some adsorbent material at the internal walls of a vessel from failing to be sufficiently heated for regeneration (e.g. due to the internal walls of being a heat sink that can prevent that material at the periphery of a bed of adsorbent material from being fully regenerated). This can help improve the effectiveness of the regeneration process and can help avoid premature breakthrough of impurities that may occur in conventional systems as a result of a peripheral portion of the bed of material adjacent an adsorber vessel's wall(s) being incompletely regenerated via the regeneration process.

We have found that utilization of a low temperature regeneration scheme can avoid a risk of damage to the adsorbent from high temperature exposure and/or significant thermal stress from the cyclical temperature swings that can occur between offline and online states (e.g. regeneration and adsorption operational states). For example, avoidance of high temperatures for regeneration can avoid high temperature steam from being formed during the regeneration process in which water may be desorbed into the heated regeneration process gas, which can prevent damage to adsorbent material from occurring during the regeneration phase of operation.

Embodiments can also permit a reduction in capital costs and operational costs. For instance, in embodiments that may utilize an electric heater type device or a regeneration gas heater type device that utilizes steam as a heating medium, such a device can be smaller and utilize less power due to the lower temperature regeneration phase that may be utilized. In embodiments that may use a heat exchanger utilizing a warm waste stream (e.g. a low heat waste stream) or a feed that may undergo cooling prior to being fed to the adsorption system, the heat exchanger can be smaller in size and there may be minimal, if any, additional power needed for such processing.

Also, because a lower heating temperature may be utilized to provide heating for use of a low temperature regeneration gas, plant design and flexibility can be improved upon because lower grade waste heat streams may be utilized as a heating medium to provide the heating of the regeneration gas. Examples of a lower grade waste heat stream can be a stream of fluid having a temperature of 50°C to 140°C, 60°C to 120°C, 60°C to 110°C, 50°C to 100°C, or 50°C to 90°C.

Embodiments utilizing the low temperature regeneration processing can also avoid utilization of a cooling step in the regeneration process. For instance, there may not be any need for the adsorber undergoing regeneration to be cooled back to its operational temperature prior to being adjusted into an online state for purification processing. This can simplify the operational approach and avoid use of different types of equipment (e.g. valves, more complex conduit arrangements, etc.). The simplification in operation can also improve reliability and allow a control system to be implemented more efficiently and flexibly as control criteria related to a cooling step in the regeneration process can be avoided and processing issues related to detection of an appropriate temperature for completion of the regeneration phase can be avoided.

In some embodiments, an after cooling device, or aftercooler device, can be positioned downstream of the adsorption system for operation where there may be a concern that initial operation of the adsorber that has undergone regeneration via low temperature regeneration and been brought into its online state without any cooling to its operational temperature occurring could pose a risk to downstream processing. Such an aftercooler device can prevent any type of heat pulse passing to downstream equipment and can be selectively utilized as may be needed while the adsorption system is in use. Such an aftercooler device can utilize an ambient air cooler, a cooling water heat exchanger, or other type of relatively low cost cooling device that can utilize a readily available cooling medium downstream of the adsorption system and upstream of a main heat exchanger or other downstream equipment (e.g. air separation distillation columns, etc.) that may be utilized in downstream processing. In some embodiments, the aftercooler device can be utilized for operation continuously. In other embodiments, it is contemplated that the aftercooler device can be operated for at least an initial time period after an adsorber has been brought back online from its offline state.

Utilization of an aftercooler device can be helpful in avoiding any residual heat from the regeneration process in addition to heat generated by adiabatic compression of the gas in the adsorber vessel(s) that are brough into their online state by undergoing an increase in pressure for purification processing passing downstream of the adsorption system in a detrimental manner. For example, such heat that may be generated can result in mechanical design temperature of some downstream equipment being exceeded at the initial phase of adsorption after the adsorber vessel(s) are brought back into the online state for purification. This type of heat disturbance can also destabilize distillation processing that may occur downstream of the adsorption system, which can result in a loss of argon recovery in some types of downstream air separation systems and/or can provide an overall reduction in operational efficiency for the downstream processing equipment.

Embodiments of our process, system, and apparatus can be utilized in adsorption systems that are configured to utilize TSA processing. Some embodiments of these types of adsorption systems can be pre-purification units (PPUs) that can be utilized to purify feeds of compressed air for air separation processing, for example. We have surprisingly found that the utilization of a lower temperature regeneration cycle, which has a longer regeneration time period and no cooling of the adsorbent bed or adsorber undergoing regeneration prior to it being brought back online, can provide surprising benefits in terms of increased operational flexibility, improved operational reliability, and improved operational efficiency. Embodiments can also provide lower capital costs associated with installation and fabrication of such systems.

We believe that embodiments can provide these types of benefits because we have surprisingly found that the temperature front can move through the bed of adsorbent material faster than the mass transfer front. This can permit the low temperature regeneration processing to avoid problematic issues that conventionally were believed to exist and also help avoid any need for cooling of the regenerated adsorbent material prior to brining the adsorbers back into an online state. It is contemplated that this type of low temperature regeneration can be utilized for any combination of gases and adsorbent material in which the temperature front will move faster than the solute front or contamination front during regeneration of the adsorbent material. This type of low temperature regeneration can be utilized for any combination of gases and adsorbent material in which the temperature front will move faster than the solute front or contamination front during use of the adsorbent material for adsorption when an adsorber having the adsorbent material is in an online state as well.

In a first aspect, a process for operation of an adsorption apparatus is provided. Embodiments of the process can include feeding a compressed gas to at least one first adsorber of an adsorption apparatus in an online state to remove one or more impurities from the compressed gas via adsorbent material of the at least one first adsorber for a pre-selected purification time period and feeding a regeneration gas to at least one second adsorber of the adsorption apparatus in an offline state at a pre-selected regeneration temperature within a pre-selected regeneration low temperature range for a pre-selected regeneration time period to heat adsorbent material of the at least one second adsorber to the pre-selected regeneration temperature to regenerate the adsorbent material of the at least one second adsorber.

In some embodiments, the pre-selected regeneration time period can be less than a pre-selected purification time period. Also, the pre-selected regeneration low temperature range can be a temperature of between 50°C and 120°C in some embodiments. In some embodiments, the pre-selected regeneration temperature can be a temperature that is less than or equal to 120°C, less than or equal to 100°C, or less than or equal to 90°C and the pre-selected regeneration temperature can also be a temperature that is greater than or equal to 50°C, greater than or equal to 60°C or greater than or equal to 70°C.

In some embodiments, the process can be performed in conjunction with a temperature swing adsorption (TSA) process. In some embodiments, the TSA process can be utilized in conjunction with a pre-purification unit of an air separation process, for example. Other embodiments may utilize other types of adsorption processing for other types of industrial processes that may utilize an adsorption system.

In a second aspect, the process can also include switching the at least one first adsorber from the online state to the offline state and switching the at least one second adsorber from the offline state to the online state such that regeneration of the adsorbent material of the at least one second adsorber does not undergo cooling prior to the at least one second adsorber being adjusted into the online state. For example, the switching can be performed without having ambient temperature gas or cooler gas that is cooler than the pre-selected regeneration temperature passed through the adsorbent material of the second adsorber(s) while the second adsorber(s) are in the offline state prior to the second adsorber(s) being switched to the online state.

In a third aspect, the process can also include feeding the compressed gas to the at least one second adsorber in the online state and feeding the regeneration gas to the at least one first adsorber in the offline state at a pre-selected regeneration temperature within the pre-selected regeneration low temperature range for the pre-selected regeneration time period to heat the adsorbent material of the at least one first adsorber to the pre-selected regeneration temperature to regenerate the adsorbent material of the at least one first adsorber.

Embodiments can also include switching the at least one second adsorber from the online state to the offline state and switching the at least one first adsorber from the offline state to the online state such that regeneration of the adsorbent material of the at least one first adsorber does not undergo cooling prior to the at least one first adsorber being adjusted into the online state. For example, the switching can be performed without having ambient temperature gas or cooler gas that is cooler than the pre-selected regeneration temperature passed through the adsorbent material of the first adsorber(s) while the first adsorber(s) is in the offline state prior to the second adsorber being switched to the online state.

In a fourth aspect, a flow rate of the regeneration gas and the pre-selected regeneration time period can be selected so that a difference between a temperature of the regeneration gas output from the adsorbent material of the at least one second adsorber in the offline state and a temperature of the regeneration gas that is fed into the adsorbent material of the at least one second adsorber in the offline state is no more than 30°C. For example, a flow rate of the regeneration gas and the pre-selected regeneration time period can be selected so that a difference in temperature of the regeneration gas from when the regeneration gas is fed into a bed of adsorbent material of the at least one second adsorber as compared to a temperature of the regeneration gas when the regeneration gas is output from the bed of adsorbent material of the at least one second adsorber is no more than 30°C.

Also, a flow rate of the regeneration gas and the pre-selected regeneration time period can be selected so that a difference between a temperature of the regeneration gas output from the adsorbent material of the at least one first adsorber in the offline state and a temperature of the regeneration gas that is fed into the adsorbent material of the at least one first adsorber in the offline state is no more than 30°C. For instance, a flow rate of the regeneration gas and the pre-selected regeneration time period can be selected so that a difference in temperature of the regeneration gas from when the regeneration gas is fed into a bed of adsorbent material of the at least one first adsorber as compared to a temperature of the regeneration gas when the regeneration gas is output from the bed of adsorbent material of the at least one first adsorber is no more than 30°C.

In a fifth aspect, the pre-selected regeneration low temperature range can be within a range of 50°C to 120°C and the pre-selected regeneration time period can be between 1 hour and 8 hours and can also be less than or equal to the pre-selected purification time period.

In a sixth aspect, the feeding of the compressed gas to the at least one first adsorber and the feeding of the regeneration gas to the at least one second adsorber can be performed such that a ratio of a molar flow rate of the regenerating gas fed to the at least one second adsorber to a molar flow rate of the compressed gas fed to the at least one first adsorber is within a pre-selected ratio range. For example, the feeding of the compressed gas to the at least one first adsorber and the feeding of the regeneration gas to the at least one second adsorber can be performed such that a ratio of a molar flow rate of the regenerating gas fed to the at least one second adsorber to a molar flow rate of the compressed gas fed to the at least one first adsorber can be between 0.1 and 0.4 or can be between 0.15 and 0.3.

In a seventh aspect, the process can also include feeding the regeneration gas through at least one regeneration gas heating device to heat the regeneration gas to the pre-selected regeneration temperature. The at least one regeneration gas heating device can be an electric heater or a heat exchanger that may utilize a low grade heat source as a heating medium (e.g. steam, compressed feed output from a compressor, etc.).

For example, in some embodiments, at least one regeneration gas heating device can be a heat exchanger that utilizes a low grade heat waste stream as a heating medium to heat the regeneration gas. The low grade heat waste stream can have a temperature in a range of 50°C to 140°C.

In an eighth aspect, the process can include feeding the compressed gas to a primary regeneration gas heating device as a heating medium to heat the regeneration gas to the pre-selected regeneration temperature. The regeneration gas can also be passed through the primary regeneration gas heating device for being heated therein.

In other embodiments, the process can include feeding the regeneration gas through a primary regeneration gas heating device to heat the regeneration gas via a heating medium fed to the primary regeneration gas heating device and feeding the heated regeneration gas output from the primary regeneration gas through a secondary regeneration gas heating device to heat the regeneration gas to the pre-selected regeneration temperature. In some embodiments, the compressed gas can be fed to the primary regeneration gas heating device as the heating medium to help heat the regeneration gas to the pre-selected regeneration temperature. In some embodiments, the secondary regeneration gas heating device can be an electric heater or a heat exchanger that can use steam as a heating medium.

In a ninth aspect, the process can include cooling the compressed gas to a pre-selected heat exchanger feed temperature via an aftercooler device positioned between a heat exchanger and the first adsorber after the one or more impurities is removed from the compressed gas.

In a tenth aspect, the process of the first aspect can include one or more features of the second aspect, the third aspect, the fourth aspect, the fifth aspect, the sixth aspect, the seventh aspect, the eighth aspect, and/or the ninth aspect. Embodiments of the process can also include other features or elements. Examples of such other features or elements can be found in the exemplary embodiments of the process discussed herein, for instance.

In an eleventh aspect, an adsorption apparatus is provided. Embodiments of the adsorption apparatus can be configured to implement an embodiment of the process for operation of an adsorption apparatus.

Embodiments of the adsorption apparatus can include a first adsorber adjustable between an online state in which a compressed gas is feedable into a vessel of the first adsorber to contact a bed of adsorbent material to remove one or more impurities from the compressed gas and an offline state in which a regeneration gas is feedable into the vessel of the first adsorber to contact the bed of adsorbent material of the first adsorber to desorb the one or more impurities from the bed of adsorbent material of the first adsorber to regenerate the bed of adsorbent material of the first adsorber. The adsorption apparatus can also include a second adsorber adjustable between an online state in which the compressed gas is feedable into a vessel of the second adsorber to contact a bed of adsorbent material of the second adsorber to remove one or more impurities from the compressed gas and an offline state in which the regeneration gas is feedable into the vessel of the second adsorber to contact the bed of adsorbent material of the second adsorber to desorb the one or more impurities from the bed of adsorbent material of the second adsorber to regenerate the bed of adsorbent material of the second adsorber.

The apparatus can also include at least one regeneration gas heating device positioned upstream of the first adsorber and the second adsorber to heat the regeneration gas to a pre-selected regeneration temperature within a pre-selected regeneration low temperature range for a pre-selected regeneration time period. In some embodiments, the pre-selected regeneration low temperature range can be a temperature of between 50°C and 120°C. For instance, in some embodiments the pre-selected regeneration temperature can be a temperature that is less than or equal to 120°C, less than or equal to 100°C, or less than or equal to 90°C and the pre-selected regeneration temperature can also be a temperature that is greater than or equal to 50°C, greater than or equal to 60°C or greater than or equal to 70°C.

In some embodiments, the apparatus can be configured to implement a temperature swing adsorption (TSA) process.

In some embodiments, the apparatus can be configured as a pre-purification unit of an air separation process. Other embodiments may be configured for utilization for other types of industrial processes that may utilize an adsorption system.

In a twelfth aspect, the at least one regeneration gas heating device can include a first regeneration gas heating device. For example, the at least one regeneration gas heating device can include a first regeneration gas heating device positioned to receive the compressed gas from a compression system as a heating medium to heat the regeneration gas and to cool the compressed gas. The compression system can be positioned upstream of the first adsorber and also positioned upstream of the second adsorber.

As another example, the at least one regeneration gas heating device can include a first regeneration gas heating device positioned to receive a heating medium to heat the regeneration gas and to cool the heating medium. The heating medium can be a gas output from a heat exchanger or a compressor positioned downstream of the first adsorber and also positioned downstream of the second adsorber.

In a thirteenth aspect, the at least one first adsorber and the at least one second adsorber can be configured such that a ratio of a molar flow rate of the regeneration gas to a molar flow rate of the compressed gas is between 0.1 and 0.4 or is between 0.15 and 0.3.

In a fourteenth aspect, the adsorption apparatus can also include an aftercooler device positioned to cool the compressed gas having the one or more impurities removed via the at least one first adsorber when the at least one first adsorber is in the online state to provide a heat exchanger feed at a pre-selected heat exchanger feed temperature, and the aftercooler device can also be positioned to cool the compressed gas having the one or more impurities removed via the at least one second adsorber when the at least one second adsorber is in the online state to provide the heat exchanger feed at the pre-selected heat exchanger feed temperature. In some embodiments, the aftercooler device can be a heat exchanger configured to utilize ambient air or water as a refrigerant.

In a fifteenth aspect, the apparatus of the eleventh aspect can include one or more features of the twelfth aspect, thirteenth aspect, and/or fourteenth aspect. Embodiments of the apparatus can also include other features or elements. Examples of such other features or elements can be found in the exemplary embodiments of the apparatus discussed herein, for instance.

Several preferred aspects of the processes and apparatus according to the present invention are outlined below.

Aspect 1: A process for operation of an adsorption apparatus, comprising:
feeding a compressed gas to at least one first adsorber of an adsorption apparatus in an online state to remove one or more impurities from the compressed gas via adsorbent material of the at least one first adsorber for a pre-selected purification time period; and
feeding a regeneration gas to at least one second adsorber of the adsorption apparatus in an offline state at a pre-selected regeneration temperature within a pre-selected regeneration low temperature range for a pre-selected regeneration time period to heat adsorbent material of the at least one second adsorber to the pre-selected regeneration temperature to regenerate the adsorbent material of the at least one second adsorber.

Aspect 2: The process of Aspect 1, comprising:
switching the at least one first adsorber from the online state to the offline state and switching the at least one second adsorber from the offline state to the online state such that regeneration of the adsorbent material of the at least one second adsorber does not undergo cooling prior to the at least one second adsorber being adjusted into the online state.

Aspect 3: The process of Aspect 2, comprising:
feeding the compressed gas to the at least one second adsorber in the online state and feeding the regeneration gas to the at least one first adsorber in the offline state at a pre-selected regeneration temperature within the pre-selected regeneration low temperature range for the pre-selected regeneration time period to heat the adsorbent material of the at least one first adsorber to the pre-selected regeneration temperature to regenerate the adsorbent material of the at least one first adsorber.

Aspect 4: The process of Aspect 3, comprising:
switching the at least one second adsorber from the online state to the offline state and switching the at least one first adsorber from the offline state to the online state such that regeneration of the adsorbent material of the at least one first adsorber does not undergo cooling prior to the at least one first adsorber being adjusted into the online state.

Aspect 5: The process of Aspect 3, wherein a flow rate of the regeneration gas and the pre-selected regeneration time period are selected so that a difference between a temperature of the regeneration gas output from the adsorbent material of the at least one second adsorber in the offline state and a temperature of the regeneration gas that is fed into the adsorbent material of the at least one second adsorber in the offline state is no more than 30°C.

Aspect 6: The process of Aspect 5, wherein a flow rate of the regeneration gas and the pre-selected regeneration time period are selected so that a difference between a temperature of the regeneration gas output from the adsorbent material of the at least one first adsorber in the offline state and a temperature of the regeneration gas that is fed into the adsorbent material of the at least one first adsorber in the offline state is no more than 30°C.

Aspect 7: The process of Aspect 1, wherein the pre-selected regeneration low temperature range is within a range of 50°C to 120°C and the pre-selected regeneration time period is between 1 hour and 8 hours and is less than or equal to the pre-selected purification time period.

Aspect 8: The process of Aspect 1, wherein a flow rate of the regeneration gas and the pre-selected regeneration time period are selected so that a difference in temperature of the regeneration gas from when the regeneration gas is fed into a bed of adsorbent material of the at least one second adsorber as compared to a temperature of the regeneration gas when the regeneration gas is output from the bed of adsorbent material is no more than 30°C.

Aspect 9: The process of Aspect 1 wherein the feeding of the compressed gas to the at least one first adsorber and the feeding of the regeneration gas to the at least one second adsorber is performed such that a ratio of a molar flow rate of the regenerating gas fed to the at least one second adsorber to a molar flow rate of the compressed gas fed to the at least one first adsorber is between 0.1 and 0.4.

Aspect 10: The process of Aspect 1, wherein the feeding of the compressed gas to the at least one first adsorber and the feeding of the regeneration gas to the at least one second adsorber is performed such that a ratio of a molar flow rate of the regenerating gas fed to the at least one second adsorber to a molar flow rate of the compressed gas fed to the at least one first adsorber is between 0.15 and 0.3.

Aspect 11: The process of Aspect 1, comprising:
feeding the regeneration gas through at least one regeneration gas heating device to heat the regeneration gas to the pre-selected regeneration temperature.

Aspect 12: The process of Aspect 11, wherein the at least one regeneration gas heating device utilizes a low grade heat waste stream as a heating medium to heat the regeneration gas, the low grade heat waste stream having a temperature in a range of 50°C to 140°C.

Aspect 13: The process of Aspect 1, comprising:
feeding the compressed gas to a primary regeneration gas heating device as a heating medium to heat the regeneration gas to the pre-selected regeneration temperature.

Aspect 14: The process of Aspect 1, comprising:
feeding the regeneration gas through a primary regeneration gas heating device to heat the regeneration gas via a heating medium fed to the primary regeneration gas heating device; and
feeding the heated regeneration gas output from the primary regeneration gas through a secondary regeneration gas heating device to heat the regeneration gas to the pre-selected regeneration temperature.

Aspect 15: The process of Aspect 1, comprising:
cooling the compressed gas to a pre-selected heat exchanger feed temperature via an aftercooler device positioned between a heat exchanger and the first adsorber after the one or more impurities is removed from the compressed gas.

Aspect 16: The process of Aspect 1, wherein the pre-selected regeneration low temperature range is within a range of 50°C to 120°C.

Aspect 17: An adsorption apparatus, comprising:
a first adsorber adjustable between an online state in which a compressed gas is feedable into a vessel of the first adsorber to contact a bed of adsorbent material to remove one or more impurities from the compressed gas and an offline state in which a regeneration gas is feedable into the vessel of the first adsorber to contact the bed of adsorbent material of the first adsorber to desorb the one or more impurities from the bed of adsorbent material of the first adsorber to regenerate the bed of adsorbent material of the first adsorber; and
a second adsorber adjustable between an online state in which the compressed gas is feedable into a vessel of the second adsorber to contact a bed of adsorbent material of the second adsorber to remove one or more impurities from the compressed gas and an offline state in which the regeneration gas is feedable into the vessel of the second adsorber to contact the bed of adsorbent material of the second adsorber to desorb the one or more impurities from the bed of adsorbent material of the second adsorber to regenerate the bed of adsorbent material of the second adsorber;
at least one regeneration gas heating device positioned upstream of the first adsorber and the second adsorber to heat the regeneration gas to a pre-selected regeneration temperature within a pre-selected regeneration low temperature range for a pre-selected regeneration time period.

Aspect 18: The adsorption apparatus of Aspect 17, wherein the at least one regeneration gas heating device comprises a first regeneration gas heating device positioned to receive the compressed gas from a compression system as a heating medium to heat the regeneration gas and to cool the compressed gas, the compression system positioned upstream of the first adsorber and also positioned upstream of the second adsorber.

Aspect 19: The adsorption apparatus of Aspect 17, wherein the at least one regeneration gas heating device comprises a first regeneration gas heating device positioned to receive a heating medium to heat the regeneration gas and to cool the heating medium, the heating medium being a gas output from a heat exchanger or a compressor positioned downstream of the first adsorber and also positioned downstream of the second adsorber.

Aspect 20: The adsorption apparatus of Aspect 17, comprising:
an aftercooler device positioned to cool the compressed gas having the one or more impurities removed via the at least one first adsorber when the at least one first adsorber is in the online state to provide a heat exchanger feed at a pre-selected heat exchanger feed temperature, and the aftercooler device also positioned to cool the compressed gas having the one or more impurities removed via the at least one second adsorber when the at least one second adsorber is in the online state to provide the heat exchanger feed at the pre-selected heat exchanger feed temperature.

It should be appreciated that embodiments of the process and apparatus can utilize various conduit arrangements and process control elements. The embodiments may utilize sensors (e.g., pressure sensors, temperature sensors, flow rate sensors, concentration sensors, etc.), controllers, valves, piping, and other process control elements. Some embodiments can utilize an automated process control system and/or a distributed control system (DCS), for example. Various different conduit arrangements and process control systems can be utilized to meet a particular set of design criteria.

Other details, objects, and advantages of our adsorption apparatus, adsorption system, plant, processes for low temperature regeneration of adsorbent material, process for operating an adsorption system, and methods of making and using the same will become apparent as the following description of certain exemplary embodiments thereof proceeds.

### BRIEF DESCRIPTION OF THE DRAWINGS

Exemplary embodiments of our adsorption apparatus, process for operating an adsorption system, process for low temperature regeneration of adsorbent material, process for operating an adsorption system, and methods of making and using the same are shown in the drawings included herewith. It should be understood that like reference characters used in the drawings may identify like components.

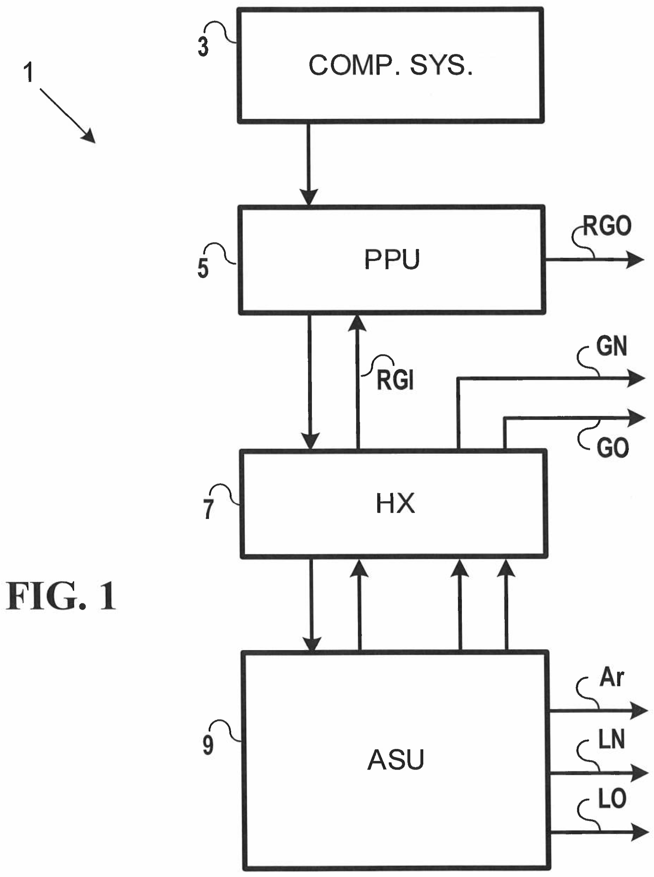

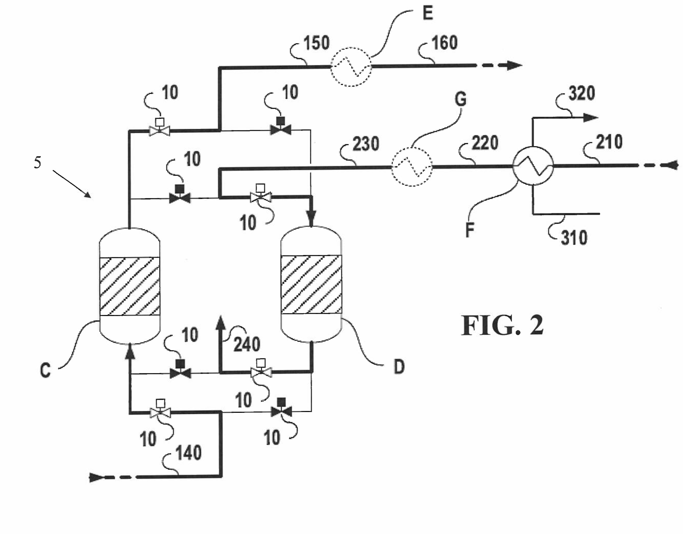

Figure 1 (which can also be referred to as FIG. 1) is a block diagram of an exemplary embodiment of a plant 1 that can utilize an embodiment of the adsorption apparatus 5. The first and second exemplary embodiments of the adsorption apparatus 5 illustrated in Figures 2-3 can be utilized in this exemplary embodiment of the plant 1.
Figure 2 (which can also be referred to as FIG. 2) is a schematic diagram illustrating a first exemplary embodiment of an adsorption apparatus 5. A first exemplary embodiment of a process of operating the first exemplary embodiment of the adsorption apparatus 5 that can utilize an exemplary embodiment of a process for low temperature regeneration of adsorbent material can also be appreciated from Figure 2.

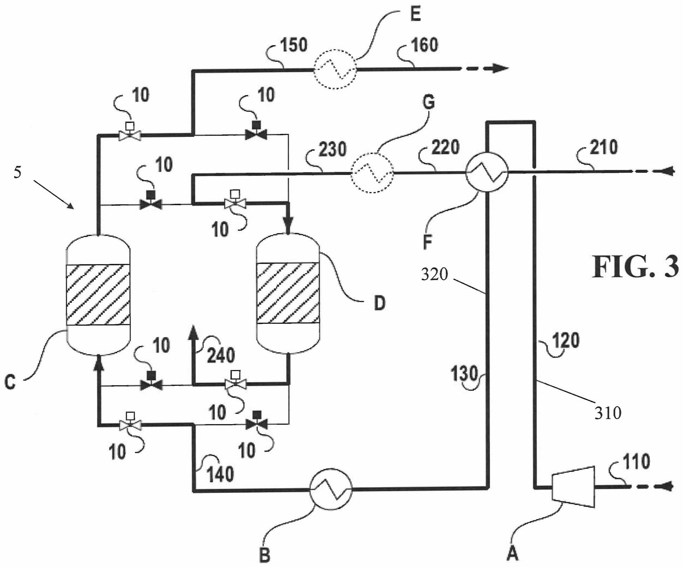

Figure 3 (which can also be referred to as FIG. 3) is a schematic diagram illustrating a second exemplary embodiment of an adsorption apparatus 5. A second exemplary embodiment of a process of operating the second exemplary embodiment of the adsorption apparatus 5 that can utilize an exemplary embodiment of a process for low temperature regeneration of adsorbent material can also be appreciated from Figure 3.

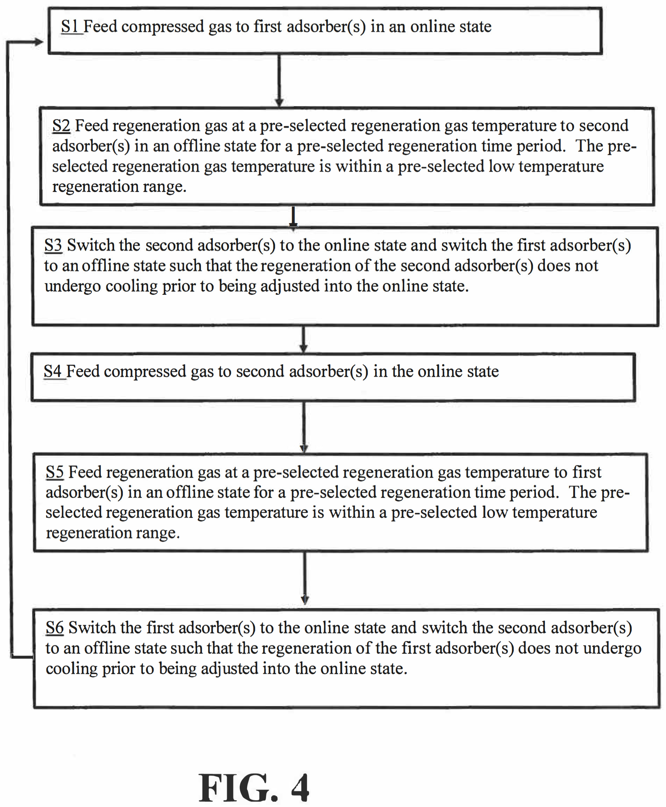

Figure 4 (which can also be referred to as FIG. 4) is a flow chart illustrating an exemplary embodiment of a process of operating an adsorption apparatus. Embodiments of the plant 1 and adsorption apparatus 5 can be configured to implement this exemplary embodiment of the process.

### The reference numerals utilized in the drawings include the following:

- 1: plant
- 3: compression system (COMP. SYS)
- 5: adsorption apparatus
- 7: heat exchanger (HX)
- 9: air separation unit (ASU)
- 10: valve
- 110: feed of fluid
- 120: compressed stream of feed
- 130: cooled compressed stream of feed
- 140: feed of compressed fluid
- 150: purified feed of fluid
- 160: heat exchanger feed to undergo cooling
- 210: regeneration gas
- 220: warmed regeneration gas stream
- 230: regeneration gas offline adsorber feed
- 240: waste stream
- 310: heating medium
- 320: cooled heating medium
- A: compressor
- Ar: argon
- B: pre-purification cooler
- C: first adsorber vessel
- D: second adsorber vessel
- E: aftercooler device
- F: primary regeneration gas heating device
- G: secondary regeneration gas heating device
- GN: gaseous nitrogen
- GO: gaseous oxygen
- LN: liquid nitrogen
- LO: liquid oxygen
- PPU: pre-purification unit
- RGI: regeneration gas fed to offline adsorber(s) of adsorption apparatus 5
- RGO: regeneration gas output from the adsorption apparatus 5
- S1: first step
- S2: second step
- S3: third step
- S4: fourth step
- S5: fifth step
- S6: sixth step

Valves 10 can be adjustable between an open position and a closed position. In Figures 2 and 3 a valve 10 is indicated as being in an open position when the valve 10 is shown with a white color fill with black lines. When in a closed position, the valve 10 is shown in solid black color.

### DETAILED DESCRIPTION OF THE INVENTION

Referring to Figures 1-4, an industrial plant 1 can be configured to receive one or more flows of feed fluid or utilize one or more feed fluids and process that feed fluid(s) to form one or more product fluids. The product fluids may be utilized as a product fluid for storage and/or transport. Alternative, the product fluids may be utilized for another downstream plant or plant process (e.g. formation of an oxidant stream to feed to a combustion device for combusting a fuel, etc.).

In some embodiments, the plant 1 can include a compression system 3 (COMP. SYS.), which can receive a feed of gas for compressing that feed to a pre-selected feed pressure for feeding downstream of the compression system 3 for use in downstream processing of the plant 1. In some embodiments, the feed can include air or be air. For example, in embodiments that may utilize an air separation unit (ASU), the feed can be air or include air.

The compression system 3 can output a pressurized feed to an adsorption apparatus 5. the adsorption apparatus 5 can be configured as a pre-purification unit (PPU) in some embodiments. For example, the PPU can include a temperature swing adsorption (TSA) system or an adsorption system that utilizes TSA. The adsorption apparatus 5 can be configured to remove one or more impurities from the pressurized feed fluid output from the compression system 3 for feeding a purified feed to a main heat exchanger 7. For example, the adsorption apparatus 5 can utilize one or more adsorbers having adsorbent material therein to remove water, carbon dioxide, and/or other constituents of a feed to purify the feed of fluid so the purified feed can be fed to the main heat exchanger 7.

The heat exchanger (HX) can include at least one heat exchanger positioned to cool the pressurized and purified feed output from the adsorption apparatus 5 via a heat exchange with one or more refrigerant process fluid flows fed to the heat exchanger 7. The one or more refrigerant process fluid flows can be warmed via absorption of heat from the purified feed fed to the heat exchanger 7 for outputting warmed refrigerant process fluid flow(s) for either venting, utilization as a regeneration gas for the adsorption apparatus 5, be used as a gaseous product for transport via pipeline, or other use of the warmed fluid output from the heat exchanger 7.

In some embodiments, there may be one or more booster compressors positioned downstream of the compression system 3 and/or adsorption apparatus 5 and upstream of the heat exchanger 7 or a downstream processing unit that is positioned downstream of the heat exchanger 7 (e.g. an ASU 9). The one or more booster compressors can be positioned to increase the pressure of one or more portions of the feed fluid output from the compression system 3 for feeding to the adsorption apparatus 5, the main heat exchanger 7, and/or a column of the ASU 9 or for other downstream processing use.

The cooled purified feed of fluid output from the heat exchanger 7 can be fed to a downstream processing unit of the plant (e.g. an ASU 9). The downstream processing unit can be, for example, an ASU 9 in some embodiments. In such embodiments, the purified feed can be purified air and the feed may be air. The ASU 9 can include a plurality of columns that include a low pressure column and a high pressure column for receiving the feed of purified air that is cooled via the heat exchanger 7 for the separation of the air to form one or more product fluids. The one or more product fluids can include, for example, gaseous nitrogen (GN), liquid nitrogen (LN), gaseous oxygen (GO), and/or liquid oxygen (LO). In some embodiments, the ASU 9 can include an intermediate pressure column that is positioned and configured to receive fluid from the low pressure column and/or high pressure column to also form a product stream of argon (Ar) as well. The argon product stream that may be formed can be a liquid argon or a gaseous argon for feeding to a storage tank or to a downstream process that may utilize the argon fluid.

In some embodiments, the gaseous products (e.g. gaseous nitrogen (GN) and/or gaseous oxygen (GO)) output from the column assembly of the ASU 9 can be passed through the main heat exchanger 7 as a refrigerant to undergo warming therein. The warmed gaseous nitrogen (GN) and/or gaseous oxygen (GO) output from the main heat exchanger 7 can be fed to a pipeline or storage as a product gas or can be fed to another plant unit for use in another plant process.

Other embodiments of the plant 1 may utilize another type of downstream processing instead of an ASU 9. In yet other embodiments, the plant 1 can also include other downstream processing units that may be positioned to receive one or more streams output from the ASU 9 for use of the fluid output from the ASU 9 (e.g. a liquefier positioned to liquify a product stream output from a column the ASU 9, a combustion device that may utilize oxygen output from the ASU as an oxidant for combustion of fuel, an ammonia manufacturing plant that may utilize nitrogen from the ASU 9 to form ammonia, etc.).

The ASU 9 or other downstream processing unit can also output at least one waste stream as a refrigerant stream that can be fed to the heat exchanger 7 for use in cooling the purified feed of fluid output from the adsorption apparatus 5 as well. The warmed waste stream(s) can be output from the heat exchanger for venting or can be fed to the adsorption apparatus 5 for use as a regeneration gas for regeneration of adsorbent material within offline adsorbers of the adsorption apparatus 5.

In some embodiments, the compression system 3 and other elements of the plant 1 can be run by renewable energy (e.g. electricity powered by solar panels, wind turbines and/or other type of renewable energy source). Other embodiments may rely on conventional electricity production systems (e.g. natural gas or coal powered electricity generation systems, etc.).

Embodiments of the adsorption apparatus 5 that can be utilized in embodiments of the plant 1 can utilize a plurality of adsorbers. Each of the adsorbers can include a vessel that retains a bed of adsorbent material therein. The adsorbers can be configured as vertical adsorbers, horizontal adsorbers, radial adsorbers, and/or other suitable type of adsorber. The adsorbent material can include silica, alumina, activated carbon, molecular sieve, or other suitable type of adsorbent material.

The adsorbers can include at least one first adsorber C and at least one second adsorber D. The adsorbers can be connected to a conduit arrangement that permits the adsorbers to be adjustable between online and offline states. The conduit arrangement can include a number of valves 10 and conduit segments so that the conduit arrangement can be configured and controlled so that (i) when the first adsorber(s) C are in the online state, the second adsorber(s) D can be in the offline state and (ii) when the second adsorber(s) D are in the online state, the first adsorber(s) C can be in the offline state. The valves 10 can be adjustable between open and closed positions so that first adsorber(s) C and second adsorber(s) D are switchable between online and offline states such that the first adsorber(s) C receive compressed feed when in the online state and the second adsorber(s) are in the offline state and the second adsorber(s) D receive compressed feed when in the online state and the first adsorber(s) C are in the offline state.

For instance, when in an online state, each adsorber can receive a feed of compressed fluid 140 from the compression system 3 to purify the compressed feed. The received compressed feed of fluid 140 can be passed through the vessel(s) of the online adsorber(s) and be output as a purified feed of fluid 150. The purified feed of fluid 150 output from the online adsorber(s) of the adsorber apparatus 5 can optionally undergo after cooling via at least one aftercooler device E positioned between the adsorbers and the main heat exchanger 7. The purified feed can be fed to the heat exchanger 7 downstream of the adsorption apparatus 5 as a heat exchanger feed 160 that is to undergo cooling in the heat exchanger 7. The aftercooler device E can be configured and positioned so that the heat exchanger is at a pre-selected heat exchanger feed temperature to help maintain downstream processing stability and also permit a more efficient utilization of the heat exchange provided via the heat exchanger 7 downstream of the aftercooler device E.

When each adsorber is in the offline state, the adsorber can receive a regeneration gas feed that can facilitate regeneration of the bed of adsorbent material within the vessel of the adsorber so that the impurities adsorbed by the adsorbent material while it is purifying feed in the online state can be desorbed and evacuated from the adsorber as a waste stream 240. As noted above, the regeneration gas that is fed to the offline adsorber(s) can be warmed waste stream(s) output from the ASU 9 or other downstream processing unit, for example.

The regeneration processing for the offline state adsorber(s) can return the adsorbent material of the offline adsorber(s) to a regenerated state in which the material can be available for further purification processing. The waste stream 240 that can be output from the adsorber can include the impurities removed from the feed when the adsorber was in the online state and can be vented. In some embodiments, the impurity containing waste stream 240 output from the adsorber when in its offline state may be vented. In some embodiments, the waste stream 240 can be utilized in one or more other processes before venting (e.g. carbon capture processing, heat exchanger processing, etc.).

The first and second adsorbers C and D can be positioned and configured to include adsorbent material therein for purification to occur for a pre-selected purification time period. The adsorption apparatus 5 can be configured so that the first adsorber(s) C can be in the online state for the pre-selected purification time period and, after this time period elapses, be switched to the offline state. The second adsorber(s) D can be configured and positioned so that the second adsorber(s) are in the offline state while the first adsorber(s) C are in the online state. When the first adsorber(s) C are switched to the offline state, the second adsorber(s) can be switched to the online state via adjustment of valves 10. The second adsorber(s) D can then be in the online state for the pre-selected purification time period. The first adsorber(s) C can receive regeneration gas at a pre-selected regeneration temperature to undergo regeneration for a pre-selected regeneration time period while the first adsorber(s) C are in the offline state. After the pre-selected purification time period elapses after the second adsorber(s) are adjusted into the online state, the second adsorber(s) D can be switched back into the offline state and the first adsorber(s) C can be switched back to the online state via adjustment of valves 10. When in the online state, the first adsorber(s) C can be fed compressed feed fluid 140 for purification of that feed with regenerated adsorbent material for the pre-selected purification time period. The second adsorber(s) D that are in the offline state can then receive the regeneration gas at the pre-selected regeneration temperature to undergo regeneration for the pre-selected regeneration time period while in the offline state.

When the adsorbers are switched between their online state and the offline state, the offline adsorber can undergo repressurization to an operational pressure range. Also, the adsorber being brought offline can under depressurization to a regeneration pressure range to facilitate regeneration.

After this pre-selected purification time period elapses, the first adsorber(s) C can again be switched to the offline state and the second adsorber(s) D can be switched back to the online state via adjustment of valves 10. The second adsorber(s) D can then be in the online state for the pre-selected purification time period and the first adsorber(s) C can again undergo regeneration for the pre-selected regeneration time period. After the pre-selected purification time period elapses for the second adsorber(s), the second adsorber(s) C can again be switched to the offline state and the first adsorber(s) D can again be switched back to the offline state via adjustment of valves 10. The first adsorber(s) C can then be in the online state for the pre-selected purification time period and the second adsorber(s) D can again undergo regeneration for the pre-selected regeneration time period.

The cycling between online and offline states can occur numerous different times. The purification time period (which can also be referred to as "onstream time" or "adsorb time") can be between 2 hours and 8 hours (e.g. at least two hours and no more than eight hours, , 2-5 hours, 2.5-6.5 hours, etc.). The pre-selected regeneration time period can be between 1 hour and 8 hours. In some embodiments the pre-selected regeneration time period can be the same time period as the pre-selected purification time period. In other embodiments, the pre-selected regeneration time period can be less time than the pre-selected purification time period.

For instance, in some embodiments, the pre-selected regeneration time period can be 1.5-3.5 hours, 2-3 hours, 2-3.5 hours, 2-4 hours, or 2-5 hours and the pre-selected purification time period can be between 3 hours and 8 hours. The pre-selected regeneration time period is not longer than the pre-selected purification time period in such embodiments and, preferably, the pre-selected regeneration time period is a smaller time period than the pre-selected purification time period.

The adsorption apparatus 5 can include other elements that can include one or more regeneration gas heating devices (e.g. at least one primary regeneration gas heating device F and optionally at least one secondary regeneration gas heating device G) for heating a regeneration gas stream to a pre-selected regeneration temperature that is within a low temperature regeneration gas temperature range. Such a temperature range can be, for example, 50°C to 120°C, or 60°C to 100°C, or 60°C to 90°C.

In some embodiments, the flow rate and regeneration time period can be selected so that the regeneration gas to be fed to one or more offline adsorbers of the adsorption apparatus 5 can be pre-selected so that the difference between the temperature of the regeneration gas output RGO from the bed of adsorbent material of the offline adsorber(s) is no more than 30°C less in temperature than the temperature of the regeneration gas feed RGI that is fed into the one or more offline adsorbers for regeneration of adsorbent material within the vessel(s) of the offline adsorber(s) (e.g. the difference in temperature of the regeneration gas from when it is fed into the bed of adsorbent material as compared to the temperature of the regeneration gas when it is output from the bed of adsorbent material is no more than 30°C).

Some embodiments may also utilize at least one aftercooler device E that can be positioned downstream of the adsorber(s) of the adsorption apparatus 5 to cool purified fluid that is output from one or more on-line adsorbers of the adsorption apparatus 5. In some configurations, a primary regeneration gas heating device F can be configured to heat a regeneration gas and also help cool compressed feed output from the compression system 3. In such embodiments, the compressed feed may be further cooled via a pre-purification cooler B positioned between the primary regeneration gas heating device F and the one or more online adsorbers of the adsorption apparatus 5 so that the compressed feed fed to the adsorber(s) is within a pre-selected temperature range (e.g. a temperature of 0°C-40° C or 0°C-30°C, etc.).

In the embodiment of the adsorption apparatus 5 shown in Figure 2, for example, the compression system 3 can provide a compressed feed of fluid 140 that is at a pre-selected feed pressure within a pre-selected feed pressure range for feeding to one or more adsorbers in the online state. The compressed feed can be passed through the adsorbent bed of material in the online adsorber(s) for removal of one or more impurities so that a purified feed of fluid 150 can be output from the online adsorber(s). In some embodiments, the purified feed of fluid 150 can undergo cooling via an aftercooler device E (shown in broken line) for cooling the purified feed of fluid 150 to a pre-selected heat exchanger feed temperature for being fed to the heat exchanger 7 as a heat exchanger feed 160 that is at a pre-selected heat exchanger feed temperature for undergoing cooling in the heat exchanger 7. The pre-selected heat exchanger feed temperature can be within a pre-selected heat exchanger feed temperature range (e.g. 0°C-40°C, 0°C-30°C, 0°C-20°C, etc.).

In some embodiments, the aftercooler device E can be an ambient air heat exchanger, a heat exchanger utilizing cooling water as the cooling medium, or other suitable type of heat exchanger for cooling the purified feed of fluid 150. In other embodiments, the aftercooler device E may not be utilized at all.

While online adsorber(s) receive the feed of compressed fluid from the compression system for purification, the offline adsorber(s) can receive regeneration gas 210, which can be regeneration gas RGI to be fed to offline adsorber(s) of the adsorption apparatus 5. The regeneration gas 210 can be warmed waste fluid output from one or more columns of an ASU 9 after that fluid has been warmed via its use as a refrigerant for cooling the heat exchanger feed 160 via the heat exchanger 7, for example. Such a waste stream that may be utilized as the regeneration gas can be comprised mostly of nitrogen, a mix of nitrogen and oxygen, or be mostly oxygen and also have almost no or no impurities to be desorbed from the adsorbent material of the offline adsorber(s) in some embodiments in which the downstream processing unit is an ASU 9, for example.

The feed of regeneration gas 210 to be fed to the offline adsorber(s) can be heated via a primary regeneration gas heating device F. The primary regeneration gas heating device F can be an electric heater or can be configured to utilize a waste stream of suitably hot fluid as a heating medium 310 to be fed to the primary regeneration gas heating device for heat exchange with the regeneration gas to warm the regeneration gas to a pre-selected regeneration gas feed temperature within a pre-selected low temperature regeneration range, which can be 50°C-120°C, 60°C-100°C, or 60°C-90°C in some embodiments. In some embodiments, the flow rate for the regeneration gas and the pre-selected regeneration time period can be selected so that the regeneration gas output from the offline adsorbers is no more than 30°C cooler than the temperature of the regeneration gas fed to the offline adsorbers for regeneration of the adsorbent material (e.g. is between more than 0°C cooler and 30°C cooler than the temperature of the regeneration gas fed to the offline adsorber(s) at the pre-selected regeneration gas feed temperature, is between more than 0°C cooler and 20°C cooler than the temperature of the regeneration gas fed to the offline adsorber(s) at the pre-selected regeneration gas feed temperature, etc.).

In some embodiments, the heating medium 310 fed to the primary regeneration gas heating device F may be output as a cooled heating medium 320 and may not have enough heat to sufficiently warm the regeneration gas to the desired pre-selected regeneration gas feed temperature. In such situations or embodiments, at least one secondary regeneration gas heating device G (shown in broken line) can be provided to further heat the regeneration gas to the desired pre-selected regeneration gas feed temperature. As noted above, this temperature can be within a pre-selected low temperature regeneration range, which can be 50°C-120°C, for some embodiments. In some embodiments, the primary regeneration gas heating device F can utilize a waste stream of fluid to utilize heat of the waste stream and the secondary regeneration gas heating device G can be an electric heater. In other embodiments, the primary and secondary heating devices can be different types of heat exchangers utilizing different heating medium streams. In some embodiments the utilize primary and secondary gas heating devices F and G, the heating mediums utilized to heat the regeneration gas for those devices can be low grade heat waste streams that can have a low grade heat temperature of 50°C to 140°C, 60°C to 120°C, 60°C to 110°C, or other type of low grade heat temperature range.

For example, the feed of regeneration gas 210 can be fed to the primary regeneration gas heating device F for being output as a warmed regeneration gas stream 220 that can be further heated via the secondary regeneration gas heating device G to the pre-selected regeneration gas feed temperature for feeding to the offline adsorber(s) as a regeneration gas offline adsorber feed 230 that is at the pre-selected regeneration gas feed temperature. In other embodiments, the primary regeneration gas heating device F can have a sufficient heating medium 310 fed therein for outputting the regeneration gas offline adsorber feed 230 that is at the pre-selected regeneration gas feed temperature.

For instance, as may be appreciated from Figure 3, a heating medium 310 fed to the primary regeneration gas heating device F can be a low grade heated stream of fluid (e.g. a stream of fluid that may not be particularly hot, but may be warmer than ambient conditions, a stream of fluid that may only be 30°C -80°C hotter than the regeneration gas stream to be heated, etc.). In some embodiments, the low grade heated stream of fluid that can be used as the heating medium 310 can be a low grade heat temperature of 50°C to 140°C, or 60°C to 120°C, or 60°C to 110°C, for example.

For instance, a compressed stream of feed 120 output from a compressor A of the compression system 3, which can compress a feed of fluid 110. The feed of fluid 110 can be air in embodiments in which the downstream processing unit includes an ASU 9, in some embodiments and the compressed stream of feed 120 can be a compressed gas. The compressed stream of feed 120 can be a heating medium 310 fed to the primary regeneration gas heating device F for heating of the regeneration gas 210.

The cooled heating medium 320 can be cooled compressed stream of feed 130 output from the primary regeneration gas heating device F. In such a configuration, the primary regeneration gas heating device F can function as a regeneration gas heating device as well as a compression system aftercooler. In situations where the cooled compressed stream of feed 130 is not sufficiently cool for feeding to the online adsorber(s) of the adsorption apparatus 5, a pre-purification cooler B can be positioned between the adsorber(s) of the adsorption apparatus 5 and the primary regeneration gas heating device F for further cooling of the feed so that the feed of compressed fluid 140 can be fed to the online adsorber(s) at a suitable temperature within a pre-selected adsorber feed temperature range (e.g. 0°C-40°C, etc.). In some embodiments, the pre-purification cooler B can be an ambient air heat exchanger, a heat exchanger that may utilize cooling water as a refrigerant, or other type of suitable cooling device for cooling the compressed feed to a suitable temperature within a pre-selected adsorber feed temperature range.

A compressed feed conduit arrangement can be positioned between the compressor A of the compression system 3 and the adsorption apparatus 5 for feeding of the compressed feed to the primary regeneration gas heating device F to function as the heating medium 310 therein and to output the cooled heating medium 320 and feed it to the online adsorber(s) (via pre-purification cooler B in some embodiments as noted above).

In other embodiments, the pre-purification cooler B may not be needed. Instead, the primary regeneration gas heating device F may sufficiently cool the compressed feed output from the compression system 3 that the cooled heating medium 320, which is the cooled compressed feed 130 output from the primary regeneration gas heating device F, can be fed to the online adsorber(s) without undergoing further cooling as the feed of compressed fluid 140 at a suitable temperature within the pre-selected adsorber feed temperature range (e.g. 0°C-40°C, etc.).

The heating medium 310 as well as any utilized secondary regeneration gas heating device G can be utilized so that the regeneration gas flow rate and pre-selected regeneration time period can be selected so that the difference between the temperature of the regeneration gas output from the bed of adsorbent material of the offline adsorber(s) is no more than 30°C less in temperature than the temperature of the regeneration gas feed that is fed into the one or more offline adsorbers for regeneration of adsorbent material within the vessel(s) of the offline adsorber(s) (e.g. the difference in temperature of the regeneration gas from when it is fed into the bed of adsorbent material as compared to the temperature of the regeneration gas when it is output from the bed of adsorbent material is no more than 30°C or is no more than 20°C, etc.).

A regeneration gas feed conduit arrangement can be positioned between the heat exchanger 7 and a regeneration gas feed conduit so that regeneration gas is feedable to the offline adsorber(s) after being passed through the primary regeneration gas heating device F and any optional secondary regeneration gas heating device G that may be utilized. The regeneration gas feed conduit can include valves 10 that can be adjusted between open and closed positions for selectively feeding the regeneration gas to the offline adsorber(s) while other adsorbers are in the online state for receiving a feed for outputting a purified feed.

In other embodiments, the primary regeneration gas heating device F can utilize another source of fluid as a heating medium 310. For instance, compressed gas from a booster compressor and/or compressed gas from a gaseous nitrogen compressor can be utilized as the heating medium 310 for cooling of that compressed gas instead of use of the compressed feed output from a compressor A of the compression system 3. Other embodiments may utilize a warm or heated stream from another process element as the heating medium 310 so that the primary regeneration gas heating device F can utilize a heating medium 310 that can facilitate recovery of heat to avoid waste heat being lost (e.g. due to venting, etc.) and improve the efficiency of a plant 1 or the downstream processing unit(s) of the plant 1 that can be downstream of the heat exchanger 7 and/or adsorption apparatus 5.

Embodiments of the adsorption apparatus 5 can be configured so that the adsorbers are configured to facilitate receipt of regeneration gas and compressed feed fluid for operation within a pre-selected ratio of a molar flow of regenerating gas to feed gas that is within a pre-selected purge/air ratio, or "P/A" ratio. In some embodiments, the P/A ratio can be higher than 0.1 and less than 0.4. For instance, the P/A ratio can be greater than or equal to 0.1 and less than or equal to 0.3 in some embodiments. For example, the adsorbers can be sized and configured so that the molar flow rate of the regeneration gas passed through the offline adsorber(s) can be between 10% and 40% or between 10% and 30% of the molar flow rate of the feed of compressed fluid 140 passed through the online adsorber(s). As yet another example, the P/A ratio can be 0.15-0.3 (e.g. the adsorbers can be sized and configured so that the molar flow rate of the regeneration gas passed through the offline adsorber(s) can be between 15% and 30% of the molar flow rate of the feed of compressed fluid 140 passed through the online adsorber(s)).

Embodiments of the adsorption apparatus 5 can be provided so that the temperature difference between the adsorber(s) in the online state performing purification and the adsorber(s) in the offline state undergoing regeneration have a pre-selected temperature differential. The pre-selected temperature differential can be selected to facilitate low temperature regeneration while also helping to minimize thermal stress that may occur from the different temperatures utilized in the online and offline states. In some embodiments, the temperature difference between the adsorber(s) in the online state performing purification and the adsorber(s) in the offline state undergoing regeneration may be no more than 100°C, no more than 70°C, or between 15°C and 30°C.

The adsorption apparatus 5 can be configured so that the switching of the adsorber(s) between the online states and offline states can occur without any cooling needed during regeneration. For example, embodiments of the adsorption apparatus 5 can be configured so that the offline adsorber(s) can undergo regeneration via the low temperature regeneration gas and be subsequently switched to an online state without any feeding of cooler regeneration gas to the offline adsorber(s). This can permit the regeneration time period to be longer to facilitate utilization of a lower temperature regeneration gas to provide improved operational efficiency and can also permit a quicker switch between online state and offline state to improve operational flexibility. Also, removal of such a cooling step in the regeneration processing can permit a more simplified configuration that utilizes less conduit and less valves and also involves a more simplified control scheme for more efficient and more flexible operation. Simplification of the regeneration process by removing the cooling step can also permit improved reliability by avoiding use of process checks to verify cooling was completed and having less valving and other adjustable process conduit elements that may fail during use as the elements experience wear.

Further, use of a lower regeneration gas temperature range and a relatively long regeneration time period can facilitate improved regeneration performance by more fully regenerating adsorbent material. This can be particularly true for adsorbent material near a vessel sidewall where the sidewall can function as a heat sink that can prevent that adsorbent material from being more fully regenerated, which can result in undesired impurity breakthrough from feed passed through that region of the bed of adsorbent material.

The longer regeneration time period utilized in combination with the lower regeneration temperature can also reduce thermal stress from the cycling of temperatures between the operational temperature of adsorber(s) during their online and offline states. The reduction in the temperature differences between these states can help reduce thermal stress that can occur from the cycling between hotter and cooler temperatures to prolong the life of the adsorber vessel and the adsorbent material. Also, the utilization of a lower regeneration temperature can help avoid generation of hot steam that can permanently degrade the adsorbent material. Embodiments can therefore provide further enhanced operational efficiencies by enhancing the life of the adsorbent material and the adsorbers as well as reducing the risk of problems arising during operations that may require operational downtime for maintenance work and/or adsorbent material replacement.

Embodiments that can utilize an aftercooler device E can help provide additional benefits. For instance, utilization of an aftercooler device E can avoid any residual heat from the regeneration process that may be present after an adsorber is switched into its online state from passing downstream to the heat exchanger 7, which could result in mechanical design temperatures of downstream equipment being exceeded that could pose thermal stress or strain problems. Additionally, it helps ensure maintenance of a desired heat exchanger feed temperature to help control the temperature profile in downstream processing (e.g. an ASU 9) in which the added heat could pose a separations processing disturbance that could destabilize the distillation process occurring downstream of the adsorption apparatus 5 and heat exchanger 7.

Utilization of the lower regeneration temperature can also permit use of smaller regeneration gas heating devices, which can reduce the capital costs associated with such devices and also reduce the operational costs for such devices It should therefore be appreciated that different embodiments can provide a number of enhancements or benefits that can result in improved operational flexibility, improved operational efficiency, as well as other benefits.

Embodiments of the plant 1 and the adsorption apparatus 5 can be configured to implement an embodiment of a process for utilization of a low temperature regeneration gas. Such a process can be utilized in a process for operation of the adsorption apparatus 5. Referring to Figure 4, in a first step S1 compressed gas can be fed to first adsorber(s) C of an adsorption apparatus in an online state. One or more impurities can be removed from the compressed gas via a bed of adsorbent material in the first adsorber(s) as the compressed gas is passed through the first adsorber(s) C. An aftercooler device E can be utilized to cool the purified compressed gas output from the first adsorber(s) C in some embodiments.

In a second step S2, regeneration gas can be fed to second adsorber(s) D in an offline state at a pre-selected regeneration gas temperature that is within a pre-selected low temperature regeneration range. The regeneration gas can be passed through the second adsorber(s) for a pre-selected regeneration time period. As discussed above, the regeneration gas can be a waste stream from an ASU 9 or other plant process unit that can be heated to the pre-selected regeneration temperature via a primary regeneration gas heating device F that may utilize a relatively low temperature heating medium 310. The heating medium can be, for example, compressed gas output from a compression system 3, or other suitable relatively low heat waste stream or other type of low heat process stream. In some embodiments, a secondary regeneration gas heating device G may be utilized to heat the regeneration gas to its pre-selected regeneration gas temperature as well so that the regeneration gas fed to the offline adsorber(s) is at a desired temperature.

In a third step S3, the second adsorber(s) D can be switched into an online state and the first adsorber(s) C can be switched into an offline state. The regeneration of the adsorbent material of the second adsorber(s) D that can occur via the feeding of regeneration gas can occur such that the regeneration of the adsorbent material and the switching of the second adsorber(s) D into the online state occurs without any cooling of the adsorbent material of the second adsorber(s) D occurring. In the third step S3, the first adsorber(s) C can be switched into an offline state in the third step S3 as well.

In a fourth step S4, compressed gas can be fed to the second adsorber(s) in the online state. The compressed gas can be purified via passing through regenerated adsorbent material within the second adsorber(s) D. An aftercooler device E can be utilized to cool the purified compressed gas output from the second adsorber(s) D in some embodiments.

In a fifth step S5, regeneration gas can be fed to first adsorber(s) C in the offline state at a pre-selected regeneration gas temperature that is within a pre-selected low temperature regeneration range. The regeneration gas can be passed through the first adsorber(s) for a pre-selected regeneration time period. As discussed above, the regeneration gas can be a waste stream from an ASU 9 or other plant process unit that can be heated to the pre-selected regeneration temperature via a primary regeneration gas heating device F that may utilize a relatively low temperature heating medium 310. The heating medium can be, for example, compressed gas output from a compression system 3, or other suitable relatively low heat waste stream or other type of low heat process stream. As can be appreciated from the above, in some embodiments a secondary regeneration gas heating device G may be utilized to heat the regeneration gas to its pre-selected regeneration gas temperature as well.

In a sixth step S6, the first adsorber(s) C can be switched into an online state and the second adsorber(s) D can be switched into an offline state. The regeneration of the adsorbent material of the first adsorber(s) D that can occur via the feeding of regeneration gas can occur such that the regeneration of the adsorbent material and the switching of the first adsorber(s) C into the online state occurs without any cooling of the adsorbent material of the second adsorber(s) occurring. In the sixth step S6, the second adsorber(s) D can be switched into an offline state as well.

The cycle in operation of purification and regeneration and switching of online and offline states for the adsorbers of the adsorption apparatus 5 can occur repeatedly as indicated in Figure 4. Embodiments of the process can also include other steps or features. For example, the regeneration gas flow rate and the pre-selected regeneration time period can be selected so that a temperature difference between the temperature of the regeneration gas output RGO from the bed of adsorbent material of the offline adsorber(s) is no more than 30°C less in temperature than the temperature of the regeneration gas feed RGI that is fed into the one or more offline adsorbers for regeneration of adsorbent material within the vessel(s) of the offline adsorber(s) (e.g. the difference in temperature of the regeneration gas from when it is fed into the bed of adsorbent material as compared to the temperature of the regeneration gas when it is output from the bed of adsorbent material is no more than 30°C).

Embodiments of the process can be performed such that there is a molar flow of regenerating gas to feed gas that is within a pre-selected purge/air ratio, or "P/A" ratio. In some embodiments, the P/A ratio can be higher than 0.1 and less than 0.4. For instance, the P/A ratio can be greater than or equal to 0.1 and less than or equal to 0.3 in some embodiments. (e.g. the molar flow rate of the regeneration gas passed through the offline adsorber(s) can be between 10% and 40% or between 10% and 30% of the molar flow rate of the feed of compressed fluid 140 passed through the online adsorber(s), the molar flow rate of the regeneration gas passed through the offline adsorber(s) can be between 15% and 30% of the molar flow rate of the feed of compressed fluid 140 passed through the online adsorber(s), etc.).

As noted above, the purification time period in which an online adsorber may receive the feed of compressed fluid 140 can be between 2 hours and 8 hours or other suitable time period. The pre-selected regeneration time period can be between 1 hour and 8 hours or other suitable time period as noted above as well (e.g. 2-3 hours, 2-4 hours, etc.).

Embodiments of the process can be performed so that the temperature difference between the adsorber(s) in the online state performing purification and the adsorber(s) in the offline state undergoing regeneration have a pre-selected temperature differential. The pre-selected temperature differential can be selected to facilitate low temperature regeneration while also helping to minimize thermal stress that may occur from the different temperatures utilized in the online and offline states. In some embodiments, the temperature difference between the adsorber(s) in the online state performing purification and the adsorber(s) in the offline state undergoing regeneration may be no more than 100°C, no more than 70°C or between 15°C and 30°C.

Embodiments of the process can be configured so that the offline adsorber(s) can undergo regeneration via the low temperature regeneration gas and be subsequently switched to an online state without any feeding of cooler regeneration gas to the offline adsorber(s) for any cooling of the adsorber(s) to occur prior to switching the adsorber(s) back into an online state. This can permit the regeneration time period to be longer to facilitate utilization of a lower temperature regeneration gas to provide improved operational efficiency and can also permit a quicker switch between online state and offline state to improve operational flexibility. Also, removal of such a cooling step in the regeneration processing can permit a more simplified configuration that utilizes less conduit and less valves and also involves a more simplified control scheme for more efficient and more flexible operation. Simplification of the regeneration process by removing the cooling step can also permit improved reliability by avoiding use of process checks to verify cooling was completed and having less valving and other adjustable process conduit elements that may fail during use as the elements experience wear.

Further, use of a lower regeneration gas temperature range and relatively long regeneration time period can facilitate improved regeneration performance by more fully regenerating adsorbent material. This can be particularly true for adsorbent material near a vessel sidewall for the adsorber(s) where the sidewall can function as a heat sink that can prevent that adsorbent material from being more fully regenerated, which can result in undesired impurity breakthrough from feed passed through that region of the bed of adsorbent material.

The longer regeneration time period utilized in combination with the lower regeneration temperature can also reduce thermal stress from the cycling of temperatures between the operational temperature of adsorber(s) during their online and offline states. The reduction in the temperature differences between these states can help reduce thermal stress that can occur from the cycling between hotter and cooler temperatures to prolong the life of the adsorber vessel and the adsorbent material. Also, the utilization of a lower regeneration temperature can help avoid generation of hot steam that can permanently degrade the adsorbent material. Embodiments can therefore provide further enhanced operational efficiencies by enhancing the life of the adsorbent material and the adsorbers as well as reducing the risk of problems arising during operations that may require operational downtime for maintenance work and/or adsorbent material replacement.

Embodiments that can utilize an aftercooler device E to cool the purified compressed gas to a pre-selected temperature (e.g. a pre-selected heat exchanger feed temperature) can help provide additional benefits as noted as above as well. For instance, utilization of an aftercooler device E can avoid any residual heat from the regeneration process that may be present after an adsorber is switched into its online state from passing downstream to the heat exchanger 7, which could result in mechanical design temperatures of downstream equipment being exceeded that could pose thermal stress or strain problems. Additionally, it helps ensure maintenance of a desired heat exchanger feed temperature to help control for the temperature profile in downstream processing (e.g. an ASU 9) in which the added heat could pose a separations processing disturbance that could destabilize the distillation process occurring downstream of the adsorption apparatus 5 and heat exchanger 7.

Embodiments of the process can also include other steps or features. For example, embodiments can include feeding at least one waste stream of an ASU 9 to the heat exchanger to function as a refrigerant therein and subsequently feed the warmed waste stream output from the heat exchanger 7 to the offline adsorber(s) as a regeneration gas for being heated to a pre-selected regeneration gas temperature for feeding to the offline adsorber(s). Such a waste stream can be a high nitrogen, high oxygen, or high argon content waste stream, or a waste stream that has a significant amount of nitrogen and oxygen, nitrogen, or oxygen therein. In other embodiments, other types of suitable streams may be utilized as a regeneration gas.

It should also be appreciated that other modifications can also be made to meet a particular set of criteria for different embodiments of the plant 1, adsorption apparatus 5 (e.g. PPU), or process. For instance, the arrangement of valves, piping, and other conduit elements (e.g., conduit connection mechanisms, tubing, seals, valves, etc.) for interconnecting different units of the apparatus for fluid communication of the flows of fluid between different elements (e.g., pumps, compressors, fans, valves, conduits, etc.) can be arranged to meet a particular plant layout design that accounts for available area of the apparatus, sized equipment of the apparatus, and other design considerations. As another example, the flow rate, pressure, and temperature of the fluid passed through at least one adsorber of an adsorption apparatus 5 as well as passed through other plant elements can vary to account for different plant design configurations and other design criteria. As yet another example, the number of plant units and how they are arranged can be adjusted to meet a particular set of design criteria. As yet another example, the material composition for the different structural components of the units of the plant 1 and the plant 1 can be any type of suitable materials as may be needed to meet a particular set of design criteria.

As yet another example, embodiments of the plant 1, adsorption apparatus, adsorption system, and process can each be configured to include or utilize process control elements positioned and configured to monitor and control operations (e.g., temperature and pressure sensors, flow sensors, an automated process control system having at least one work station that includes a processor, non-transitory memory and at least one transceiver for communications with the sensor elements, valves, and controllers for providing a user interface for an automated process control system that may be run at the work station and/or another computer device of the plant, etc.). It should be appreciated that embodiments can utilize a distributed control system (DCS) for implementation of one or more processes and/or controlling operations of an apparatus or process as well.

As another example, it is contemplated that a particular feature described, either individually or as part of an embodiment, can be combined with other individually described features, or parts of other embodiments. The elements and acts of the various embodiments described herein can therefore be combined to provide further embodiments. Thus, while certain exemplary embodiments of the process, apparatus, system, and methods of making and using the same have been shown and described above, it is to be distinctly understood that the invention is not limited thereto but may be otherwise variously embodied and practiced within the scope of the following claims.

## Claims

1. A process for operation of an adsorption apparatus, comprising:
feeding a compressed gas to at least one first adsorber of an adsorption apparatus in an online state to remove one or more impurities from the compressed gas via adsorbent material of the at least one first adsorber for a pre-selected purification time period; and
feeding a regeneration gas to at least one second adsorber of the adsorption apparatus in an offline state at a pre-selected regeneration temperature within a pre-selected regeneration low temperature range for a pre-selected regeneration time period to heat adsorbent material of the at least one second adsorber to the pre-selected regeneration temperature to regenerate the adsorbent material of the at least one second adsorber.

2. The process of claim 1, wherein a flow rate of the regeneration gas and the pre-selected regeneration time period are selected so that a difference between a temperature of the regeneration gas output from the adsorbent material of the at least one second adsorber in the offline state and a temperature of the regeneration gas that is fed into the adsorbent material of the at least one second adsorber in the offline state is no more than 30°C.

3. The process of claim 1 or 2, comprising:
switching the at least one first adsorber from the online state to the offline state and switching the at least one second adsorber from the offline state to the online state such that regeneration of the adsorbent material of the at least one second adsorber does not undergo cooling prior to the at least one second adsorber being adjusted into the online state.

4. The process of claim 3, comprising:
feeding the compressed gas to the at least one second adsorber in the online state and feeding the regeneration gas to the at least one first adsorber in the offline state at a pre-selected regeneration temperature within the pre-selected regeneration low temperature range for the pre-selected regeneration time period to heat the adsorbent material of the at least one first adsorber to the pre-selected regeneration temperature to regenerate the adsorbent material of the at least one first adsorber.

5. The process of claim 4, comprising:
switching the at least one second adsorber from the online state to the offline state and switching the at least one first adsorber from the offline state to the online state such that regeneration of the adsorbent material of the at least one first adsorber does not undergo cooling prior to the at least one first adsorber being adjusted into the online state.

6. The process of claim 4 or 5, wherein a flow rate of the regeneration gas and the pre-selected regeneration time period are selected so that a difference between a temperature of the regeneration gas output from the adsorbent material of the at least one first adsorber in the offline state and a temperature of the regeneration gas that is fed into the adsorbent material of the at least one first adsorber in the offline state is no more than 30°C.

7. The process of any preceding claim, wherein the pre-selected regeneration low temperature range is within a range of 50°C to 120°C.

8. The process of any preceding claim, wherein the pre-selected regeneration time period is between 1 hour and 8 hours and is less than or equal to the pre-selected purification time period.

9. The process of any preceding claim, wherein the feeding of the compressed gas to the at least one first adsorber and the feeding of the regeneration gas to the at least one second adsorber is performed such that a ratio of a molar flow rate of the regenerating gas fed to the at least one second adsorber to a molar flow rate of the compressed gas fed to the at least one first adsorber is between 0.1 and 0.4, or between 0.15 and 0.3.

10. The process of any preceding claim, comprising:
feeding the regeneration gas through at least one regeneration gas heating device to heat the regeneration gas to the pre-selected regeneration temperature.

11. The process of claim 10, wherein the at least one regeneration gas heating device utilizes a low grade heat waste stream as a heating medium to heat the regeneration gas, the low grade heat waste stream having a temperature in a range of 50°C to 140°C.

12. The process of any one of claims 1 to 10, comprising:
feeding the compressed gas to a primary regeneration gas heating device as a heating medium to heat the regeneration gas to the pre-selected regeneration temperature.

13. The process of any one of claims 1 to 10, comprising:
feeding the regeneration gas through a primary regeneration gas heating device to heat the regeneration gas via a heating medium fed to the primary regeneration gas heating device; and
feeding the heated regeneration gas output from the primary regeneration gas through a secondary regeneration gas heating device to heat the regeneration gas to the pre-selected regeneration temperature.

14. The process of any preceding claim, comprising:
cooling the compressed gas to a pre-selected heat exchanger feed temperature via an aftercooler device positioned between a heat exchanger and the first adsorber after the one or more impurities is removed from the compressed gas.

15. An adsorption apparatus, comprising:
a first adsorber adjustable between an online state in which a compressed gas is feedable into a vessel of the first adsorber to contact a bed of adsorbent material to remove one or more impurities from the compressed gas and an offline state in which a regeneration gas is feedable into the vessel of the first adsorber to contact the bed of adsorbent material of the first adsorber to desorb the one or more impurities from the bed of adsorbent material of the first adsorber to regenerate the bed of adsorbent material of the first adsorber; and
a second adsorber adjustable between an online state in which the compressed gas is feedable into a vessel of the second adsorber to contact a bed of adsorbent material of the second adsorber to remove one or more impurities from the compressed gas and an offline state in which the regeneration gas is feedable into the vessel of the second adsorber to contact the bed of adsorbent material of the second adsorber to desorb the one or more impurities from the bed of adsorbent material of the second adsorber to regenerate the bed of adsorbent material of the second adsorber;
at least one regeneration gas heating device positioned upstream of the first adsorber and the second adsorber to heat the regeneration gas to a pre-selected regeneration temperature within a pre-selected regeneration low temperature range for a pre-selected regeneration time period.
